# EUROPEAN PATENT SPECIFICATION

(11) **EP 2 425 749 B1**
(45) Date of publication and mention of the grant of the patent: **17.12.2014**
(21) Application number: 10769683.3
(22) Date of filing: 20.04.2010
(51) Int. Cl.: A47C 27/15, A47C 7/18

(54) **SEAT PAD**
SITZUNTERLAGE
COUSSIN DE SIÈGE

(30) Priority: 30.04.2009 JP 2009111255
(43) Date of publication of application: 07.03.2012
(73) Proprietor: Bridgestone Corporation, Tokyo 104-8340 (JP)
(72) Inventor: SANEFUJI, Kouji, Yokohama-shi Kanagawa 244-8510 (JP); ZENBA, Masaaki, Yokohama-shi Kanagawa 244-8510 (JP); SHINOHARA, Toshimitsu, Yokohama-shi Kanagawa 244-8510 (JP)
(74) Representative: Oxley, Robin John George
(86) International application number: PCT/JP2010/057314
(87) International publication number: WO 2010/125984

(56) References cited:
- DE-B3-102005 002 689
- GB-A- 1 326 192
- JP-A- 9 070 330
- JP-A- 9 070 330
- JP-A- 10 015 973
- JP-A- 2002 306 283
- JP-A- 2002 306 283
- JP-A- 2003 327 027
- JP-A- 2009 291 537
- US-A- 3 844 613
- US-A- 4 755 411

## Description

### TECHNICAL FIELD

This invention relates to a seat pad comprising foamed resin material as a main body, which is, for example, used for a seat of a car or the like.

### RELATED ART

A vehicle seat pad used for a car or the like usually provides an additional component of different hardness placed partly around or on the seat pad main body formed of flexible foamed resin, to enhance seating comfort and reduce tiredness of long-time seating, while ensuring support stability and safety.

However, because the adherence between the flexible foamed resin and the additional component is often weak, there is a problem with the current seat pad, wherein the additional component is easily peeled off from the main body of flexible foamed resin, due to the form of the additional component.

Accordingly, for example, as disclosed in Ref. 1, the additional component is placed and buried into the back surface of the flexible foamed resin, so that their surfaces are even, to make the component not to be peeled off easily. Furthermore, as disclosed in Ref. 2, it suggests that the surface of the additional component of foamed polyethylene is processed for enhancing adherence performance by roughening method or the like, to improve adhesion between additional component and main body of seat pad. GB 1326192 and DE102005002689 disclose padding elements for seats.

These arts need many operation steps, such as prior processing for burying and surface processing, thus the decreased work efficiency was undeniable.

### PATENT REFERENCES

Ref. 1 JP2006-130006
Ref.2 JP H01-249312

### THE OBJECT TO BE ACHIEVED BY THIS INVENTION

This invention relates to a seat pad, and in particular it suggests the seat pad, wherein adhesion strength between flexible foamed resin material and a beads-foamed-body is enhanced without decreasing the strength of the beads-foamed-body itself.

### THE MEANS TO ACHIEVE THE OBJECT

The seat pad related to this invention is specialized in that said seat pad comprises a seat pad main body consisting of flexible foamed resin material and a beads-foamed-body attached by molding on at least partly the seat pad main body, wherein fusing rate of the beads-foamed-body is within the range of 50 % to 90%.

In this invention, "fusing rate" is defined as quantified rate of the foamed particles per 1cm² of cross-section surface of the molded beads-foamed-body, and it represents the rate of co-adhesion of melted beads that are the basic material of the beads-foamed-body.

Preferably, said foamed resin material is polyurethane foam, and the beads-foamed body is polystyrene foam in such seat pad.

### THE ADVANTAGE OF THIS INVENTION

The seat pad of the invention has a beads-foamed-body with the fusing rate particularly within the range of 50 to 90%, to maintain the strength of the beads-foamed-body itself, while the roughened surface of the bead-foamed-body enables the flexible foamed resin material to intrude into the rough surface. Therefore, adhesion strength between the seat pad main body and the additional component can be enhanced without prior processing for enhancing the adhesion and the like.

That is, when the fusing rate is less than 50%, the strength of the additional component of beads-foamed-body is decreased, and the internal adhesion of beads-foamed-body is weak, to make the beads-foamed-body to be peeled off and cause molding process to be difficult. Thus, it may result in the defective product. In contrast, when the fusing rate is more than 90%, the whole surface of the beads-foamed-body is so smooth that the amount of intrusion of the flexible foamed resin material is decreased. Thus, the adhesion between the beads-foamed-body and the flexible foamed resin material may be decreased.

### BRIEF DESCRIPTION OF THE DRAWINGS

Fig.1 shows a vertical cross-sectional view of a seating part of a seat pad of one embodiment of the invention.
Fig. 2 shows the testing method of the examples.
Fig.3 shows the results of the examples.
Fig. 4 shows the enlarged photos of the surface of beads-foamed-bodies used in the examples.

### EMBODIMENTS TO CARRY OUT THIS INVENTION

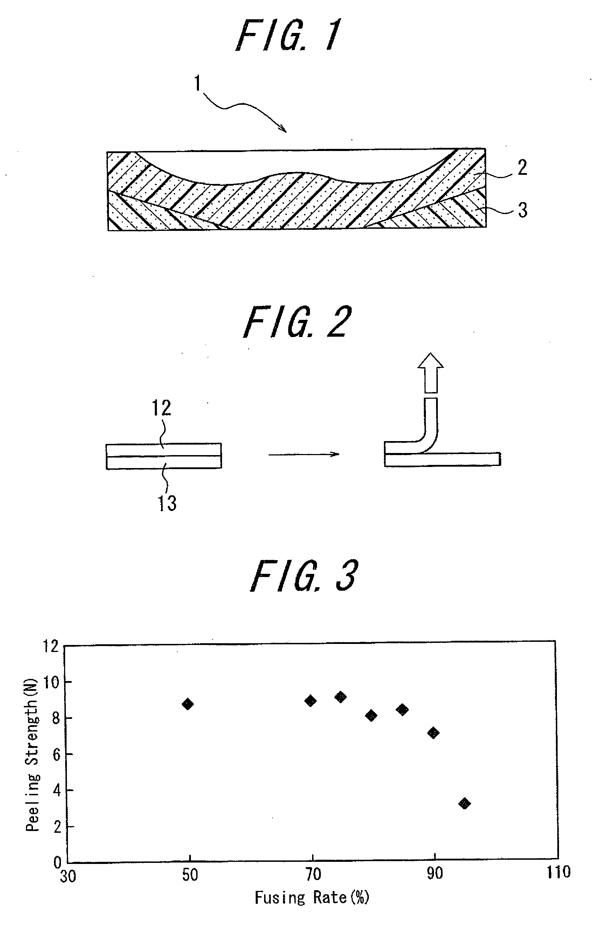

This invention is described in detail below, referring to the figures. Fig.1 shows a vertical cross-sectional view of a seating part of a seat pad of one embodiment of the invention.

In the figure, (1) shows a seating part of a seat pad, and the seat pad (1) comprises a seat pad main body (2) of flexible foamed resin material and a pair of additional components (3) of beads-foamed-body attached at least partly on the seat pad main body (2). In the figure, the additional components (3) are attached at the bottom and the side of the seat pad main body (2). Each component has wedge-like cross-sectional view, wherein the thickness is reduced gradually from the side edge of the seat pad main body (2) toward the center of cross direction.

Here, the seat pad main body (2) has so-called mono-foam structure, basically constituting only flexible foamed resin material with single hardness. Placing the materials having required property, for example the additional components (3) with different hardness on the side of the seat pad main body (2), can increase the hardness to the side part, so to create enhancement of seating comfort, holding performance, ability of seating and standing, and the like, which are contradicting properties to the seating part of the seat pad (1), which was hard to be achieved simultaneously with only the mono foam structure.

When the seat pad (1) is deformed toward the pressed direction by weight of a seated passenger, the deformation mainly occurs on the seat pad main body (2), thus, the pressures to the passenger's thighs and buttock evens out, i.e. the pressure fluctuation is decreased enough. In contrast, by a pair of the additional components (3), a constructive side-support can be provided to the passenger.

In addition, the flexible foamed resin material of the seat pad main body (2) may be foamed resin material with elasticity, preferably polyurethane foam, regarding moldability and seating comfort.

The additional component of beads-foamed-body (3) includes foamed bodies of synthetic resin, such as olefin resin, preferably polystyrene foam, with respect to light weight as well as thermal insulating property and shock-absorbing property of external stress, and durability.

Furthermore, in this seat pad (1), the fusing rate of the beads-foamed-body may be 50 to 90 %, preferably 50 to 85 %, which enhances the adhesive strength between the seat pad main body (2) and the additional component (3) enough, while providing the additional component (3) required strength.

In addition, this fusing rate can be controlled with the molding temperature, the heating time, or the like.

The production of such seat pad (1) follows steps below, such as placing the additional components in a mold to determine the position; supplying unprocessed liquid of flexible foamed resin material into the mold; along with clamping the mold, heating-and-foaming the unprocessed liquid; curing the flexible foamed resin material after foaming, opening the mold; and demolding. The additional components (3), which are placed in the mold to determine the position, is adhered on the seat pad main body (2) to form a single combined body with it, and are remolded from the mold with the seat pad main body (2) smoothly.

### EXAMPLE

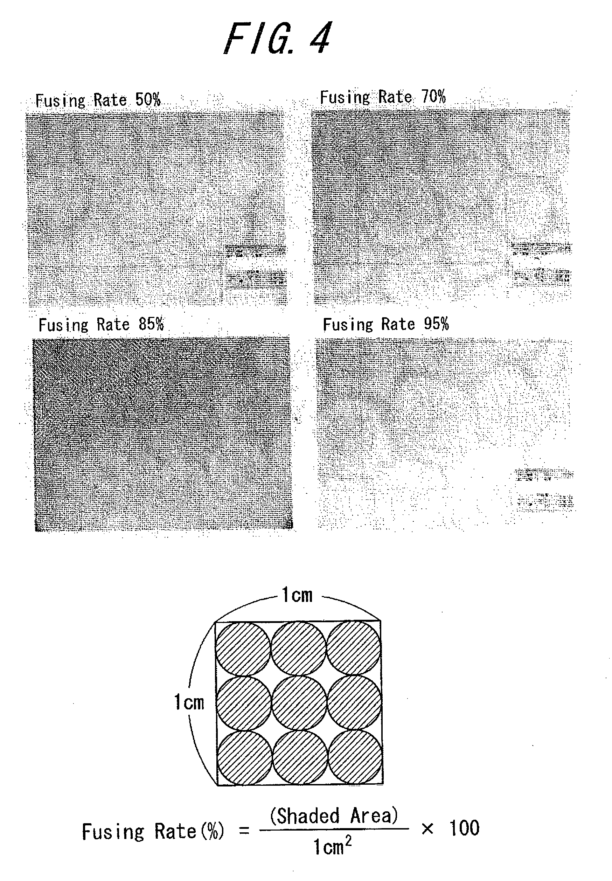

As structures shown in Fig.2, then, the flexible foamed resin material (12) of polyurethane foam and the beads-foamed-body (13) of polystyrene foam, which has the fusing rate as shown in Table 1, were joined; each five test pieces of the joined components were prepared with the size of 200 x 25 x 6 (thickness) mm utilizing peeling test machine (test machine name is "Intesco"); said test pieces were attached on an alcohol-washed stainless board (polished with the means of JIS # 280) of a peeling test machine; the test pieces were applied to the 90-degrees-peeling test at the room temperature twenty minutes after the attachment, and the peeling intensities were measured. The test results are shown in Table 1 and Fig. 3 and 4.

Here, the peeling rate was 300 mm / min, and the actual values and the average values of each 5 test pieces were recorded.

In addition, the values in the table were average values of each 5 test pieces.

**[Table 1]**

| | | | | | | | | |
|---|---|---|---|---|---|---|---|---|
| Fusing Rate (%) | 40 | 50 | 70 | 75 | 80 | 85 | 90 | 95 |
| Peeling Strength (N) | - | 8.7 | 8.8 | 9.0 | 8.0 | 8.3 | 7.0 | 3.0 |

The results in Table 1 and Fig. 3 and 4 show that the adhesive strength between the flexible foamed resin material (12) and the beads-foamed-body (13) was excellent, without decreasing the strength of the beads-foamed-body itself, when the fusing rate was in the range of 50 to 90%.

### THE EXPLANATION OF THE SYMBOLS

1 Seat Pad; 2 Seat Pad Main Body; 3 Additional Component; 12 Flexible Foamed Resin Material; 13 Beads-Foamed-Body

## Claims

1. A seat pad (1) comprising a seat pad main body (2) consisting of flexible foamed resin material, and a beads-foamed-body attached by molding on at least partly the seat pad main body (2), wherein fusing rate of the beads-foamed-body is within the range of 50 % to 90% and the fusing rate is the area of the foamed particles per 1cm² of cross-section surface of the molded beads-foamed-body.

2. A seat pad (1) according to claim 1, wherein said flexible foamed resin material is polyurethane foam, and said beads-foamed-body is polystyrene foam.

3. A seat pad (1) according to claim 1 or claim 2, wherein said beads-foamed body comprises a pair of additional components (3) attached at least partly on the bottom and side of the seat pad main body (2).

4. A seat pad (1) according to claim 3, wherein said pair of additional components (3) forms a constructive side-support.

## Patentansprüche

1. Sitzunterlage (1), die einen Sitzunterlagenhauptkörper (2) aufweist, der aus flexiblem Schaumharzmaterial und einem Wulstschaumkörper besteht, der durch Formen an mindestens einem Teil des Sitzunterlagenhauptkörpers (2) befestigt ist, wobei die Schmelzrate des Wulstschaumkörpers innerhalb des Bereiches von 50 % bis 90 % liegt, und wobei die Schmelzrate die Fläche der Schaumteilchen pro 1 cm² der Querschnittsfläche des geformten Wulstschaumkörpers ist.

2. Sitzunterlage (1) nach Anspruch 1, bei der das flexible Schaumharzmaterial Polyurethanschaumstoff und der Wulstschaumkörper Polystyrolschaumstoff sind.

3. Sitzunterlage (1) nach Anspruch 1 oder Anspruch 2, bei der der Wulstschaumkörper ein Paar zusätzliche Komponenten (3) aufweist, die mindestens teilweise am Boden und der Seite des Sitzunterlagenhauptkörpers (2) befestigt sind.

4. Sitzunterlage (1) nach Anspruch 3, bei der das Paar der zusätzlichen Komponenten (3) eine konstruktive Seitenauflage bildet.

## Revendications

1. Coussin de siège (1) comprenant un corps principal de coussin de siège (2) constitué d'un matériau de résine moussée souple et un corps en perles de mousse fixé par moulage sur au moins une partie du corps principal de coussin de siège (2), le taux de fusion du corps en perles de mousse étant compris entre 50 % et 90 % et le taux de fusion représentant l'aire des particules moussées par cm² de surface de section transversale du corps moulé en perles de mousse.

2. Coussin de siège (1) selon la revendication 1, ledit matériau de résine moussée souple étant une mousse de polyuréthane et ledit corps en perles de mousse étant une mousse de polystyrène.

3. Coussin de siège (1) selon la revendication 1 ou la revendication 2, ledit corps en perles de mousse comprenant une paire de composants additionnels (3) fixés, au moins en partie, sur le dessous et le côté du corps principal de coussin de siège (2).

4. Coussin de siège (1) selon la revendication 3, ladite paire de composants additionnels (3) formant un support latéral constructif.
